# EUROPEAN PATENT SPECIFICATION

(11) **EP 2 793 093 B1**
(45) Date of publication and mention of the grant of the patent: **21.12.2016**
(21) Application number: 14175498.6
(22) Date of filing: 16.09.2008
(51) Int. Cl.: G05B 19/418

(54) **Methods and apparatus to upgrade and provide control redundancy in process plants**
Verfahren und Vorrichtung zum Aktualisieren und Bereitstellen von Steuerungsredundanz in Verarbeitungsbetrieben
Procédés et appareils pour mettre à niveau des installations de traitement et leur fournir une redondance de commande

(30) Priority: 18.09.2007 US 857250
(43) Date of publication of application: 22.10.2014
(62) Divisional of application: 13189502.1
(73) Proprietor: Fisher-Rosemount Systems, Inc., Austin, TX 78759 (US)
(72) Inventor: Smith, David Mark, Round Rock, Texas 78664 (US); Hieb, Brandon, Cedar Park, Texas 78613 (US); Denison, David R., Austin, Texas 78726 (US); Sherriff, Godfrey R., Austin, Texas 78717 (US); Law, Gary, Georgetown, Texas 78628 (US); Tetmeyer, Kyle, Round Rock, Texas 78681 (US)
(74) Representative: Parker, Andrew James

(56) References cited:
- EP-A1- 1 083 483
- WO-A1-2007/100290
- US-A- 6 101 327
- US-B1- 6 360 363
- US-B1- 6 684 396

## Description

### FIELD OF THE DISCLOSURE

This disclosure relates generally to process plants and, more particularly, to methods and apparatus to upgrade and provide control redundancy in process plants.

### BACKGROUND

Distributed process control systems, like those used in chemical, petroleum and/or other processes, systems, and/or process plants typically include one or more process controllers communicatively coupled to one or more field devices via any of a variety of analog, digital and/or combined analog/digital buses. In such systems and/or processes, field devices including, for example, valves, valve positioners, switches and/or transmitters (e.g., temperature, pressure, level and flow rate sensors), are located within the process environment and perform process control, alarm and/or management functions such as opening or closing valves, measuring process parameters, etc. Process controllers, which may also be located within the plant environment, receive signals indicative of process measurements made by the field devices and/or other information pertaining to the field devices. Based on, for example, the received signals, the process controllers execute a controller application to realize any number and/or type(s) of control modules, software modules, software sub-systems, routines and/or software threads to initiate alarms, make process control decisions, generate control signals, and/or coordinate with other control modules and/or function blocks performed by field devices, such as HART and Fieldbus field devices. The control modules in the controller(s) send the control signals over the communication lines to the field devices to control the operation of the process plant.

Information from the field devices and/or the controller is usually made available over a data highway or communication network to one or more other hardware devices, such as operator workstations, personal computers, data historians, report generators, centralized databases, etc. Such devices are typically located in control rooms and/or other locations remotely situated relative to the harsher plant environment. These hardware devices, for example, run applications that enable an operator to perform any of a variety of functions with respect to the process(es) of a process plant, such as changing an operating state, changing settings of the process control routine(s), modifying the operation of the control modules within the process controllers and/or the field devices, viewing the current state of the process(es), viewing alarms generated by field devices and/or process controllers, simulating the operation of the process(es) for the purpose of training personnel and/or testing the process control software, keeping and/or updating a configuration database, etc.

As an example, the DeltaV™ control system sold by Fisher-Rosemount Systems, Inc., an Emerson Process Management company, supports multiple applications stored within and/or executed by different devices located at potentially diverse locations within a process plant. A configuration application, which resides in and/or is executed by one or more operator workstations, enables users to create and/or change process control applications, and/or download process control applications via a data highway or communication network to dedicated distributed controllers. Typically, these control applications are made up of communicatively coupled and/or interconnected control modules, software modules, software sub-systems, routines, software threads and/or function blocks that perform functions within the control scheme (e.g., process control and/or alarm generation) based on received inputs and/or that provide outputs to other blocks within the control scheme. The configuration application may also allow a configuration engineer and/or operator to create and/or change operator interfaces which are used, for example, by a viewing application to display data for an operator and/or to enable the operator to change settings, such as set points and/or operating states, within the process control routines. Each dedicated controller and, in some cases, field devices, stores and/or executes a control application that runs the control modules assigned to implement actual process control functionality.

Document U.S. Patent No. 6,101,327 discloses a method for replacing software in an operating computer system, and in particular, synchronization of state transfer between processes within the old software to processes in the new software according to the preamble of claim 1 and claim 12.

### SUMMARY

The present invention relates to a method of controlling a process in which software for a process plant based on control components of a process control system is upgraded while the process control system is maintaining active control process operations, and is further detailed by independent claims 1 and 12. The method may be further characterised according to the dependent claims.

### BRIEF DESCRIPTION OF DRAWINGS

FIG. 1 is a schematic illustration of an example process control system constructed in accordance with the teachings of the invention.
FIG. 2 illustrates an example manner of implementing any or all of the example controllers of FIG. 1.
FIGS. 3 and 4 illustrate example redundancy control schemes for the process control system of FIG. 1.
FIG. 5 is a flowchart representative of example process that may be carried out to implement the example redundancy controller and/or, more generally, any or all of the example controllers of FIGS. 1 and/or 2.
FIG. 6 is a flowchart representative of a process that may be carried out to implement the example upgrade module of FIG. 2 to upgrade any or all of the example control components of FIG. 2, according to an aspect of the present invention.
FIGS. 7A, 7B, 7C and 7D illustrate an example process that may be carried out to upgrade any or all of the example control components of FIG. 2.
FIGS. 8A and 8B illustrate a control system operating two versions of a control component, according to an aspect of the present invention.
FIG. 9 is a schematic illustration of an example processor platform that may be used and/or programmed to carry out the example process of FIGS. 5, 6 and/or 7A-7D, more generally, to implement any or all of the example controllers of FIGS. 1 and/or 2.

### DETAILED DESCRIPTION

Modern process control systems provide for process plant operation twenty four hours-a-day, three hundred-sixty five days-a-year. The control of continuously operating process plants creates a need for efficient and/or flexible mechanisms to upgrade the firmware of control devices. Such control device upgrades need to minimize control device downtime and/or substantially eliminate plant operation interruptions. Traditionally, control devices have been upgraded using redundant control devices to reduce periods of unavailability. A traditional procedure upgrades an entire backup control device, allows the backup device to become configured by the active device, performs a switchover to the backup device, and then upgrades the new backup device (i.e., the previously active device).

In general, the examples apparatus, methods, and articles of manufacture described herein may be used to reduce and/or eliminate the need for redundant control devices to provide uninterrupted process plant operation during control device upgrades. In particular, functions of the control devices and/or control algorithms are isolated, split and/or separated into individual components (e.g., software modules and/or software sub-systems), which enable each component to be upgraded independently from other components. By using separate components, control devices can be upgraded on a feature-by-feature basis, component-by-component basis, and/or to resolve an issue in a particular component without affecting other active components, portions of the control device and/or process control system. To upgrade a particular component, a replacement component is instantiated within the control device that is currently executing the component to be upgraded. Periods of unavailability during upgrades are eliminated by implementing the control components to be capable of transferring runtime and/or state data to other versions of the same component. Such intelligence permits an existing component to continue execution while it transfers critical data to its replacement component. Once the state of the new component is updated, the replacement component takes over operation with the same state information as the original component. By facilitating upgrades of particular components, the need for entire redundant control devices is substantially eliminated. In addition, a processor controller may execute multiple versions of the same component.

In some examples, a control device includes and/or implements a master upgrade module to receive updated component firmware from a user. The upgrade module installs the new component by creating an instance of the replacement component, and initiating data updates between the replacement component and the component it is to replace. After updates are completed, the replacement component is configured to an active mode, and the old component may be terminated.

Fast recovery from events such as software failures, hardware failures and/or continued operation during software upgrades is important. Traditionally, process control systems have attempted to provide continuous control operation through the use of dedicated redundant control devices. The redundant copy of the control device is configured to mimic the current state of the actively running control device. When the actively running device is no longer able to complete its tasks (for one or more reasons), the backup control device takes over and runs all of the tasks assigned to the device. However, it is difficult to ensure seamless and/or bump-less failover as it requires that the backup device be continually synchronized with process data and/or state information from the active running device. This approach often leads to periods where the backup is unavailable to take over for the active device.

In general, the examples apparatus, methods, and articles of manufacture described herein may be used to replace the need for dedicated redundant control devices by allowing redundancy to be distributed within the process control system. Using a distributed approach, redundancy operations are implemented using free resources of other active control devices and/or within the active control device itself. Essentially, all control components are considered active and, thus, have the current process data and state information.

In some examples, multiple control components of the same type execute in parallel with each other, with each control component performing the action of an active control component. Outputs from all components are directed to a gateway that uses a voting algorithm to determine which output from which control component will be communicated to the field device(s). In other examples, the control components exchange outputs and collectively determine which output is communicated to the field device(s).

As described herein, the multiple control components of the same type can be executed and/or carried out on the same control device, processor and/or controller, and/or can be implemented across two or more control devices, processors and/or controllers. The assignment of control components to control devices, processors and/or controllers can be determined dynamically based on the processing load and/or number of available control devices, processors and/or controllers. Moreover, assignments may change as the processor load(s) and/or number of available control devices, processors and/or controllers changes.

As described herein, the implementation of process plant control redundancy based on control components rather than control devices, reduces hardware overhead, provides additional redundancy paths, realizes faster failure recovery and/or eliminates periods of unavailable process control.

While methods and apparatus to replace the need for dedicated redundant control devices by allowing redundancy to be distributed within a process control system, and/or to reduce and/or eliminate the need for redundant control devices to provide uninterrupted process plant operation during control device upgrades, persons of ordinary skill in the art will readily appreciate that the example methods and apparatus may be used to implemented redundancy and/or perform upgrades for other systems, such as a safety instrumented system for a process plant.

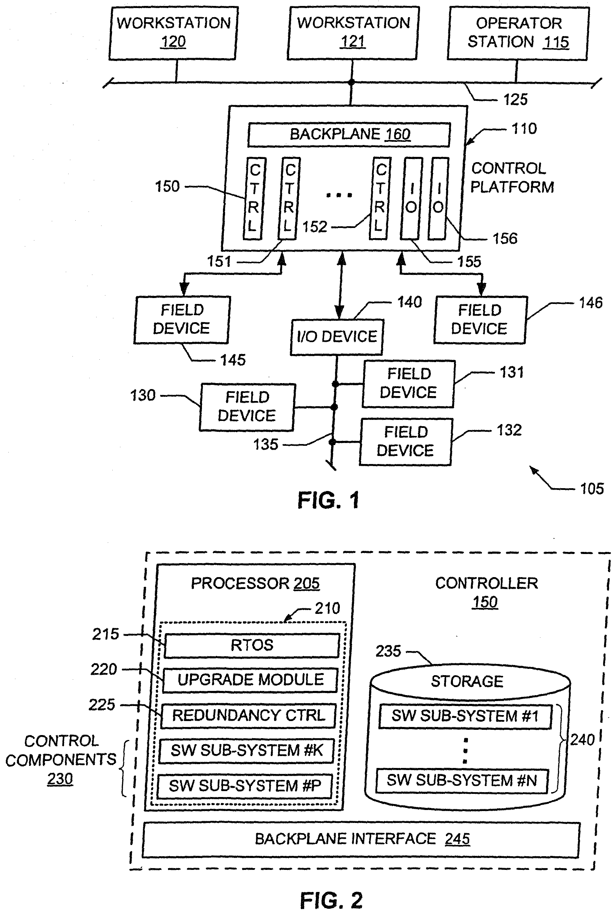

FIG. 1 is a schematic illustration of an example process control system 105. The example process control system 105 of FIG. 1 includes one or more process control platforms (one of which is designated at reference numeral 110), one or more operator stations (one of which is designated at reference numeral 115), and one or more workstations (two of which are designated at reference numerals 120 and 121). The example process control platform 110, the example operator station 115 and the workstations 120 and 121 are communicatively coupled via a bus and/or local area network (LAN) 125, which is commonly referred to as an area control network (ACN).

The example workstations 120 and 121 of FIG. 1 may be configured as application stations that perform one or more information technology applications, user-interactive applications and/or communication applications. For example, the application station 120 may be configured to perform primarily process control-related applications, whereas the application station 121 may be configured to perform primarily communication applications that enable the process control system 105 to communicate with other devices or systems using any desired communication media (e.g., wireless, hardwired, etc.) and protocols (e.g., HTTP, SOAP, etc.). The operator station 115 and the workstations 120 and 121 may be implemented using one or more workstations or any other suitable computer systems or processing systems. For example, the operator station 115 and/or workstations 120 and 121 could be implemented using single processor personal computers, single or multi-processor workstations, etc.

The example LAN 125 of FIG. 1 may be implemented using any desired communication medium and protocol. For example, the example LAN 125 may be based on a hardwired and/or wireless Ethernet communication scheme. However, as will be readily appreciated by those having ordinary skill in the art, any other suitable communication medium(s) and/or protocol(s) could be used. Further, although a single LAN 125 is illustrated in FIG. 1, more than one LAN and/or other alternative pieces of communication hardware may be used to provide redundant communication paths between the example systems of FIG. 1.

The example control platform 110 of FIG. 1 is coupled to a plurality of smart field devices 130, 131 and 132 via a digital data bus 135 and an input/output (I/O) device 140. The smart field devices 130-132 may be Fieldbus compliant valves, actuators, sensors, etc., in which case the smart field devices 130-132 communicate via the digital data bus 135 using the well-known Fieldbus protocol. Of course, other types of smart field devices and communication protocols could be used instead. For example, the smart field devices 130-132 could instead be Profibus and/or HART compliant devices that communicate via the data bus 135 using the well-known Profibus and HART communication protocols. Additional I/O devices (similar and/or identical to the I/O device 140 may be coupled to the control platform 110 to enable additional groups of smart field devices, which may be Fieldbus devices, HART devices, etc., to communicate with the control platform 110.

In addition to the example smart field devices 130-132, one or more non-smart field devices 145 and 146 may be communicatively coupled to the control platform 110. The example non-smart field devices 145 and 146 of FIG. 1 may be, for example, conventional 4-20 milliamp (mA) or 0-10 volts direct current (VDC) devices that communicate with the control platform 110 via respective hardwired links.

The example control platform 110 of FIG. 1 may be, for example, a DeltaV™ controller sold by Fisher-Rosemount Systems, Inc., an Emerson Process Management company. However, any other controller could be used instead. Further, while only one control platform 110 in shown in Fig. 1, additional control platforms and/or controllers of any desired type and/or combination of types could be coupled to the LAN 125. In any case, the control platform 110 may perform one or more process control routines associated with the process control system 105 that have been generated by a system engineer and/or other system operator using the operator station 115 and which have been downloaded to and/or instantiated in the control platform 110.

To execute one or more control algorithms, the example control platform 110 of FIG. 1 includes one or more controllers (i.e., control devices) (three of which are designated at reference numerals 150, 151 and 152). The example controllers 150-152 of FIG. 2 contain one or more processors (i.e., control devices) to execute one or more operating systems, control algorithms, control components and/or software subsystems. As used herein, the term "control device" refers to a controller (e.g., any of the example controllers 150-152) and/or a processor, a central processing unit (CPU) and/or a processor core of a controller. For ease of discussion, the following disclosure refers to the use of controllers t facilitate redundancy and/or upgrading of control components. However, the methods and apparatus described herein may be based and/or applied to any type of control devices (e.g., a processor, a CPU and/or a processor core of a controller). As described below in more detail, the example controllers 150-152 facilitate the redundancy and/or upgrading of control components without the need for explicit redundant and/or backup controllers. Control algorithms carried out by the example controllers 150-152 are isolated, split and/or separated into individual components (e.g., software modules and/or software sub-systems) to enable each component to be upgraded independently from other components. An example manner of implementing any or all of the example controllers 150-152 of FIG. 1 is described below in connection with FIG. 2.

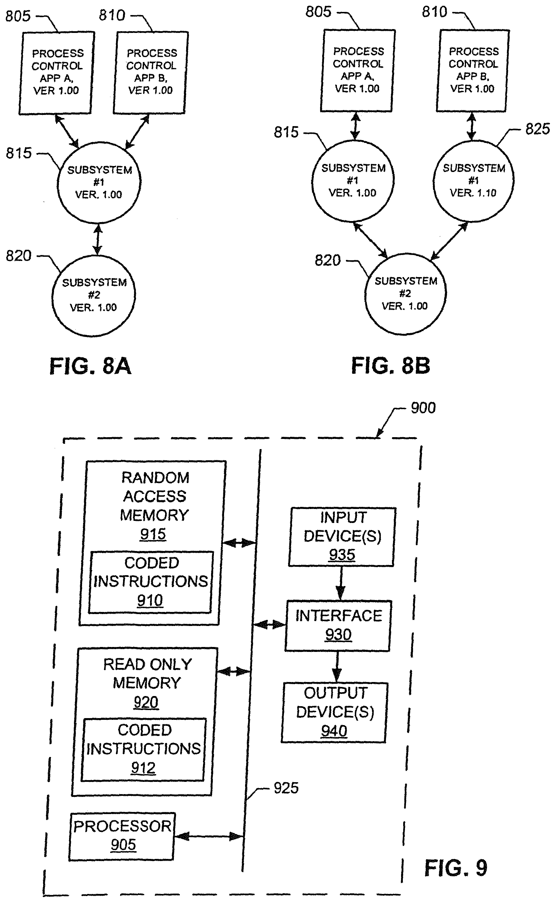

The example controllers 150-152 of FIG. 1 include and/or implement a master upgrade module that allows each control component carried out by a controller 150-152 to be upgraded independently from other control components. To upgrade a particular component, a replacement component is instantiated within the controller 150-152 that is currently executing the component to be upgraded. Periods of unavailability during upgrades are eliminated by implementing the control components to be capable of transferring runtime and/or state data to other versions of the same component. Such intelligence permits an existing component to continue execution while it transfers critical data to its replacement component. Once the state of the new component is updated, the replacement component takes over operation with the same state information as the original component. As described below in connection with FIGS. 8A and 8B, a controller 150-152 may, additionally or alternatively, execute multiple versions of the same component.

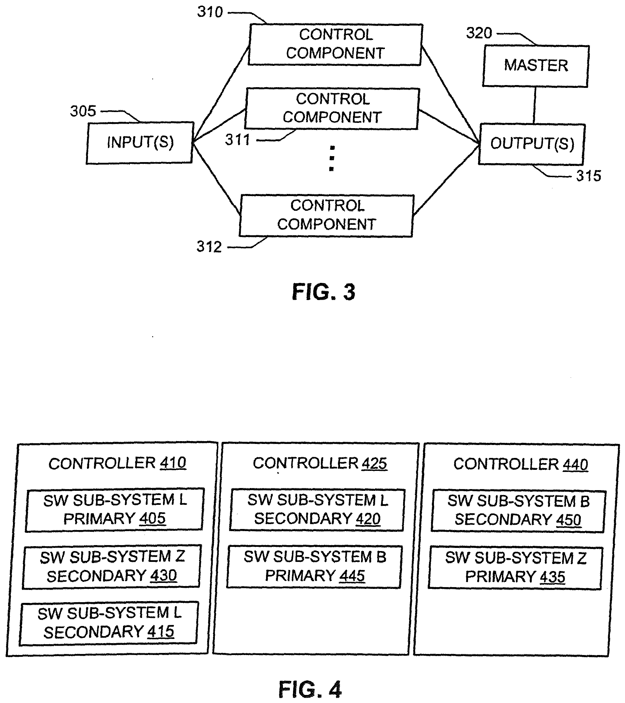

Multiple copies of the same control component can be executed by the same and/or different controllers 150-152 to carry out control redundancy for the example process control system 105 of FIG. 1. The control component copies can be executed by the same controller 150-152, by different controllers 150-152 and/or by different control platforms 110. As described below in connection with FIG. 3, each of the copies of the same control component receive the same inputs from the field devices 130-132, 145 and/or 146 and execute the same software sub-system. The outputs of the control component copies can then be used (e.g., compared) to determine which output is communicated to the field device(s) 130-132, 145 and/or 146. For example, majority voting can be performed by an I/O gateway (e.g., one of the example I/O gateways 155 and/or 156) to determine which output should be communicated to the field device(s) 130-132, 145 and/or 146. Additionally or alternatively, the control component copies can exchange outputs and collectively determine which output should be communicated to the field device(s) 130-132, 145 and/or 146.

To communicatively couple the example controllers 150-152 to the field devices 130-132, 145 and/or 146 and/or the I/O device 140, the example control platform 110 of FIG. 1 includes one or more I/O modules and/or gateways (two of which are designated at reference numerals 155 and 156). The example I/O gateways 155 and 156 of FIG. 1 are configurable to route data between the controllers 150-152 and the field devices 130-132, 145 and/or 146 and/or the I/O device 140. The example controllers 150-152 and the example I/O gateways 155 and 156 are communicatively coupled within the control platform 110 via any type of backplane 160. As illustrated in FIG. 1, the example control platform 110 is implemented as a rack and/or shelf, where the example controllers 150-152 and the I/O gateways 155 and 156 are cards and/or modules that when plugged-in to shelf and/or rack become communicatively coupled to the backplane 160. Additionally or alternatively, the controllers 150-152 and the I/O gateways 155 and 156 are implemented separately and communicatively coupled via the LAN 125.

While FIG. 1 illustrates an example process control system 105 within which the methods and apparatus to upgrade and provide control redundancy in process plants described in greater detail below may be advantageously employed, persons of ordinary skill in the art will readily appreciate that the methods and apparatus to upgrade and provide control redundancy in process plants described herein may, if desired, be advantageously employed in other process plants and/or process control systems of greater or less complexity (e.g., having more than one control platform) than the illustrated example of FIG. 1.

FIG. 2 illustrates an example manner of implementing any or all of the example controllers 150-152 of FIG. 1. While any or all of the controllers 150-152 of FIG. 1 may be represented by the device of FIG. 2, for ease of discussion, the device of FIG. 2 will be referred to as controller 150. The example controller 150 of FIG. 2 includes at least one general purpose programmable processor 205. The example processor 205 of FIG. 2 executes coded instructions present in a main memory 210 of the processor 205 (e.g., within a random-access memory (RAM) and/or a read-only memory (ROM)). The processor 205 may be any type of processing unit, such as a processor core, a processor and/or a microcontroller. The processor 205 may execute, among other things, a real-time operating system (RTOS) 215, an upgrade module 220, a redundancy controller 225 and/or one or more control components 230. The example RTOS 215 is the QNX™ RTOS from QNX Software Systems Ltd. The example main memory 210 of FIG. 2 may be implemented by and/or within the processor 205 and/or may be one or more memories and/or memory devices electrically coupled to the processor 205.

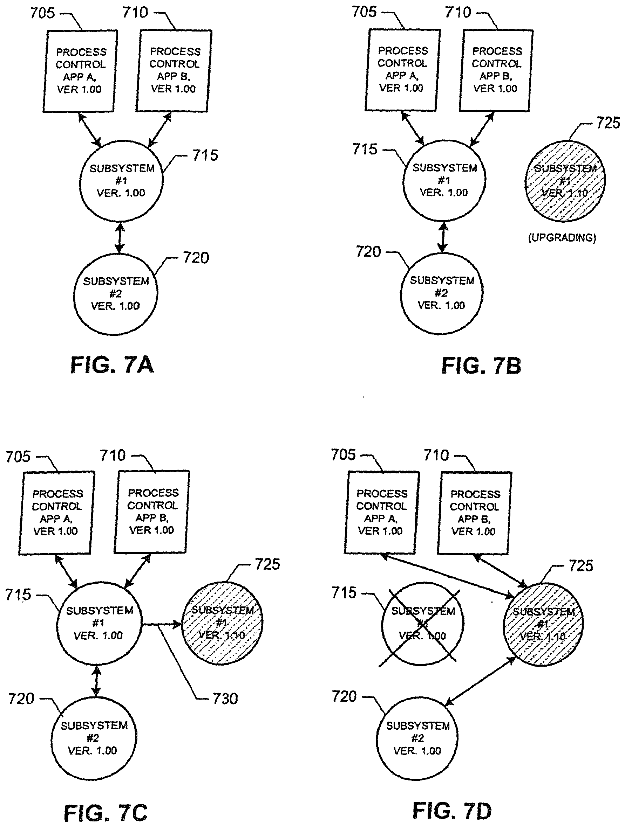

As described below in connection with FIGS. 7A-D, the example upgrade module 220 of FIG. 2 controls the upgrade of one or more of the example control components 230. As described below in connection with FIGS. 8A-B, the example upgrade module 220 can, additionally or alternatively, control the simultaneous and/or parallel execution of different versions of a control algorithm and/or control component (e.g., a software sub-system).

As described below in connection with FIGS. 3-5, the example redundancy controller 225 of FIG. 2 controls and/or selects which output from a set of control component copies is communicated to a field device 130-132, 145 and/or 146. Additionally or alternatively, the redundancy controller 225 determines which control component copy should be the master for a particular control component. While the example redundancy controller 225 of FIG. 2 is shown separately from the control components 230, each of the control components may include and/or implement a redundancy controller.

The example control components 230 of FIG. 2 implement and/or carry out all or a portion (e.g., a software sub-system) of a control algorithm. The example control components 230 receive inputs from one or more field devices 130-132, 145 and/or 146 and/or another control component 230, and process the inputs to form (e.g., compute) one or more outputs. The outputs may be directed to another control component 230 (e.g., to carry out one or more additional steps of a control algorithm) and/or to one or more field devices 130-132, 145 and/or 146.

To store images 240 of control algorithms and/or control components (e.g., software sub-systems), the example controller 150 of FIG. 2 includes non-volatile storage 235. The example non-volatile storage 235 of FIG. 2 stores the images 240 of one or more control components. In addition to storing the images 240 of control components currently being executed by the processor 205, the example storage 235 can store images 240 of other control components that may be executed by the processor 205. While the example storage 235 of FIG. 2 is illustrated as being associated with a particular controller 150, the storage 235 may be stored across a set of controllers (e.g., the example controllers 150-152 of FIG. 1). The storage 235 may be implemented by any number and/or type(s) of memory(-ies) and/or memory device(s).

To communicate with a backplane (e.g., the example backplane 160 of FIG. 1), the example controller 150 of FIG. 2 includes a backplane interface 245. The example backplane interface 245 of FIG. 2 electrically and/or communicatively couples the example processor 205 to the backplane of a control platform (e.g., the example control platform 110) into which the controller 150 is inserted.

While an example manner of implementing any or all of the example controllers 150-152 of FIG. 1 has been illustrated in FIG. 2, the data structures, elements, processes and devices illustrated in FIG. 2 may be combined, divided, re-arranged, omitted, eliminated and/or implemented in any other way. Further, the example RTOS 215, the example upgrade module 220, the redundancy controller 225, the example control components 230 and/or, more generally, the example controller 150 of FIG. 2 may be implemented by hardware, software, firmware and/or any combination of hardware, software and/or firmware. Further still, the example controller 150 may include additional elements, processes and/or devices instead of, or in addition to, those illustrated in FIG. 2, and/or may include more than one of any or all of the illustrated data structures, elements, processes and devices.

FIGS. 3 and 4 illustrate example redundancy control schemes for the example process control system 105 of FIG. 1. In the illustrated example of FIG. 3, input(s) 305 from one or more field devices (e.g., the example devices 130-132, 145 and/or 146 of FIG. 1), and/or from a control algorithm and/or control component are provided to two or more copies of a particular control component (three of which are designated at reference numerals 310, 311 and 312). The example control components 310-312 of FIG. 3 implement all or a portion of a control algorithm (e.g., a software sub-system of a control algorithm). The example control components 310-312 may be implemented and/or carried out by one or more controllers (e.g., one or more of the example controllers 150-152 of FIG. 1). For example, all of the control components 310-312 may be carried out by a single controller, each of the control components 310-312 may be carried out by a different controller, etc. The allocation of the control components 310-312 to controllers may be static and/or dynamic. If the assignment is dynamic, the allocation may be adjusted, for example, based on the number of available controllers and/or the current and/or historical processing loads of the available controllers. Moreover, the number of redundant copies of a particular control components may be static and/or dynamic depending on, for example, the relative importance of the control component, the number of available controllers and/or the current and/or historical processing loads of the available controllers. An example allocation of the redundant copies of different control components (e.g., software sub-systems) to different controllers is described below in connection with FIG. 4.

The example control components 310-312 of FIG. 3 execute and/or carry out the same software sub-system. When all of the control components 310-312 are operating properly (e.g., without any error(s)), the outputs 315 of all of the control components 310-312 are identical. When a particular one of the control components 310-312 has failed, is failing, is experiencing an error condition, etc. its output(s) 315 may differ from the outputs 315 of the other control components 310-312. The detection of such a difference in and/or absence of output(s) 315 allows a failed, failing and/or errored control component 310-312 to be identified.

In the illustrated example of FIG. 3, a master 320 is configured to detect such failed, failing and/or errored control components 310-312, and to select which output(s) 315 of which control component 310-312 is to be communicated to a field device, and/or to another control component of the same and/or a different control algorithm. The example master 320 of FIG. 3 may be a central processor, controller and/or software sub-system dedicated to performing majority voting to detect failed, failing and/or errored control components 310-312 and/or to select which output(s) 315 to communicate to the field device. Additionally or alternatively, the example master 320 may be dynamically selected from the control components 310-312. That is, each of the control components 310-312 includes the logic to serve as the master 320 for that control component. In such an example, the example control components 310-312 exchange their output(s) 315 to allow each of the control components 310-312 to perform majority voting to detect failed, failing and/or errored control components 310-312 and/or to select which output(s) 315 to communicate to the field device. If a control component 310-312 that is not currently acting as the master 320 detects that the master control component 310-312 has failed, is failing and/or is errored, the control component 310-312 can take over as the master 320 and notify a system operator (e.g., via the operator station 115) of the failed, failing and/or errored control component 310-312. Which control component 310-312 takes over as the master 320 may be determined using a master arbitration scheme, such as a round-robin selection algorithm.

FIG. 4 illustrates an example allocation of the redundant copies of a number of control components (e.g., software sub-systems) to different controllers. In the illustrated example of FIG. 4, a first copy 405 of a software sub-system L is assigned to a control device (e.g., a controller) 410, a second copy 415 of the software sub-system L is also assigned to the controller 410, and a third copy 420 of the software sub-system L is assigned to a second control device (e.g., a second controller) 425. Further, a first copy 430 of a software subsystem Z is assigned to the controller 410, and a second copy 435 assigned to a third control device (e.g., a third controller 440). Likewise, a first copy 445 of a software sub-system B is assigned to the controller 425, and a second copy 450 assigned to the controller 440.

In the illustrated example of FIG. 4, each copy of a particular software subsystem is either a master (e.g., primary) or a secondary for that particular software subsystem. The designation of master or secondary may be static and/or dynamic, and/or may be determined by the copies of the software sub-system themselves, and/or by a central redundancy control process. As illustrated, a given controller may be a primary for one software sub-system while being a secondary for another software sub-system. Moreover, the number of redundant copies of each software sub-system may be different.

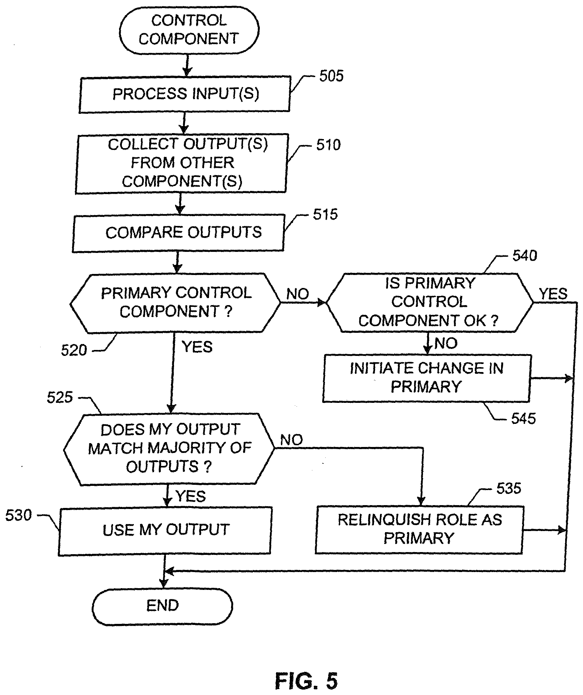

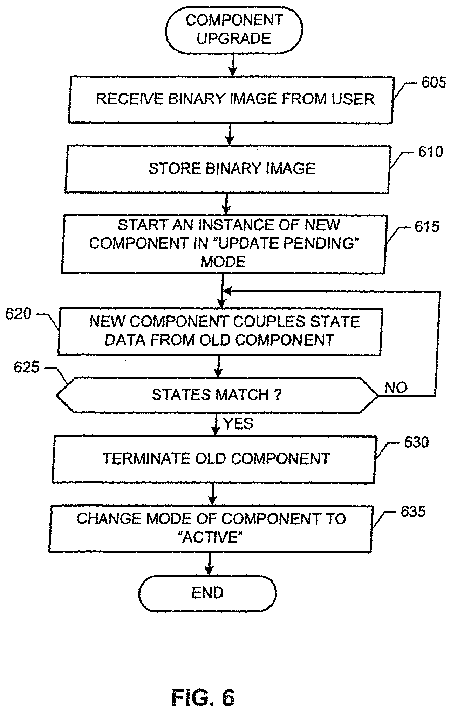

FIG. 5 is a flowchart representative of an example process that may be carried out to the example redundancy controller 225 of FIG. 2 and/or, more generally, any or all of the example controllers 150-152 described herein. FIG. 6 is a flowchart representative of a process that may be carried out to implement the example upgrade module 220 of FIG. 2 to upgrade any or all of the example control components of FIG. 2, according to an aspect of the present invention. The example processes of FIGS. 5 and/or 6 may be carried out by a processor, a controller and/or any other suitable processing device. For example, the example processes of FIGS. 5 and/or 6 may be embodied in coded instructions stored on a tangible machine accessible or readable medium such as a flash memory, a ROM and/or random-access memory RAM associated with a processor (e.g., the example processor 905 discussed below in connection with FIG. 9). Alternatively, some or all of the example operations of FIGS. 5 and/or 6 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, one or more of the operations depicted in FIGS. 5 and/or 6 may be implemented manually or as any combination of any of the foregoing techniques, for example, any combination of firmware, software, discrete logic and/or hardware. Further, although the example processes of FIGS. 5 and/or 6 are described with reference to the flowcharts of FIGS. 5 and/or 6, persons of ordinary skill in the art will readily appreciate that many other methods of implementing the example processes of FIGS. 5 and/or 6 may be employed. For example, the order of execution of the blocks may be changed, and/or some of the blocks described may be changed, eliminated, sub-divided, or combined. Additionally, persons of ordinary skill in the art will appreciate that any or all of the example operations of FIGS. 5 and/or 6 may be carried out sequentially and/or carried out in parallel by, for example, separate processing threads, processors, devices, discrete logic, circuits, etc.

The example process of FIG. 5 begins when a copy of a control component (e.g., any one of the example control components 230 of FIG. 2) receives inputs from another control component and/or a field device. The control component copy processes the received inputs (block 505) to form (e.g., compute) one or more outputs (e.g., the example outputs 315 of FIG. 3). A redundancy controller (e.g., the example redundancy controller 225) collects and/or receives the output(s) computed by other copies of the control component (block 510) and compares those collected output(s) with that computed by the copy of the control component (block 515).

If the control component copy is a master (e.g., primary) for the control component (block 520), and if the master's output matches the majority of the outputs from the other copies of the control component (block 525), the control component sends its output to another control component (of the same and/or a different control algorithm) and/or a field device (block 530). Control then exits from the example process of FIG. 5.

Returning to block 525, if the master's output does not match the majority of the outputs from the other copies of the control component (block 525), the current master relinquishes its roles as a master (block 535). Control then exits from the example process of FIG. 5.

Returning to block 520, if the control component copy is not currently the master for the control component (block 520), the redundancy controller determines whether the current master is operating correctly (block 540). For example, if the output(s) of the master match the output(s) of the majority of the other control component copies, the redundancy controller determines that that current master is operating correctly. Additionally or alternatively, the current master and the redundancy controller may exchange so-called "heart beat" signals (periodic and/or aperiodic) that allow the current master and/or the redundancy controller to determine if the other device is functional and/or responsive. For example, if the redundancy controller receives a heart beat signal from the master, the redundancy controller determines that the current master is operating correctly. If the current master is operating correctly (block 540), control exits from the example process of FIG. 5. If the current master is not operating correctly (block 540), the redundancy controller copy initiates a change in the master for the control component (block 545). Control then exits from the example process of FIG. 5.

The example process of FIG. 6 begins when a user desires to upgrade a particular control component. An upgrade module (e.g., the example upgrade module 220 of FIG. 2) receives a binary image from the user (block 605) and stores the binary image (e.g., the example storage 235) (block 610), according to an aspect of the present invention. The upgrade module starts an instance of the new control component in an "update pending" mode (block 615), according to an aspect of the present invention. In some examples, the new control component is instantiated as an isolated process of an RTOS.

The upgrade module initiates the transfer of state data from the old component to the new component (block 620). In some examples, the state data is copied using inter-process communication capabilities of the RTOS, such as a portable operating system interface (POSIX) function call. When the transfer of state data is complete (block 625), the upgrade module may terminate the original control component (block 630), and changes the mode of the new control component to "active" (block 635). Control then exits from the example process of FIG. 6.

In some examples, a new component may be tested before the old component is terminated. In such instances, if the new component does not operate correctly the new component may be terminated and the old component remains an active component. In other examples, a new component may be later found to be deficient and/or defective, and the upgrade module may revert back to the original component until a revised new component is available.

FIGS. 7A, 7B, 7C and 7D illustrate an example process that may be carried out by an upgrade module (e.g., the example upgrade module 220 of FIG. 2) to upgrade a control component (e.g., any or all of the example control components 230). FIG. 7A illustrates an initial state of two process control applications 705 and 710 that utilize a control component 715 and a control component 720. In the illustrated example of FIGS. 7A-7D the control component 715 is to be upgraded to a new version.

As illustrated in FIG. 7B, the upgrade module starts an instance 725 of a newer version of the control component 715 as an isolated process. In the illustrated example of FIG. 7C, the original control component 715 copies state data and/or information 730 to the new control component 725. When the state of the new control component 725 matches the state of the original control component 715, the upgrade module changes the mode of the new control component 725 to "active" and terminates the original control component 715, as illustrated in FIG. 7D.

FIGS. 8A and 8B illustrate an example control system operating two versions of a control component, according to an aspect of the present invention. FIG. 8A illustrates an initial state of two process control applications 805 and 810 that utilize a control component 815 and a control component 820. In the illustrated example of FIGS. 8A and 8B, the control component 815 is to be upgraded to a new version for the control application 810. As illustrated in FIG. 8B, the upgrade module starts an instance 825 of a newer version of the control component 815 and begins routing inputs for the process control application 810 to the new control component 825, while inputs for the process control application 805 continue to be passed to the original control component 815, according to an aspect of the present invention. Both the original control component 815 and the new control component 825 continue to use the same control component 820.

The simultaneous execution of two versions of a particular control component allows a process control system additional flexibility in adding new features and/or in fixing defects in existing control components. For example, a new control component containing a so-called "hot fix" that may not yet be fully quality tested can be introduced and utilized by only those control algorithms requiring the change. Other control algorithms not needing the new control component can continue using the original control component until the new control component is officially released. Additionally or alternatively, two versions of a control component can also be used to test a new control component before it is officially released, and/or changes that may not be backwards compatible can be introduced before all other affected control components are updated.

FIG. 9 is a schematic diagram of an example processor platform 900 that may be used and/or programmed to implement any or all of the example control platform 110, the controllers 150-152, and/or the example processor 205 described herein. For example, the processor platform 900 can be implemented by one or more general purpose processors, processor cores, microcontrollers, etc.

The processor platform 900 of the example of FIG. 9 includes at least one general purpose programmable processor 905. The processor 905 executes coded instructions 910 and/or 912 present in main memory of the processor 905 (e.g., within a RAM 915 and/or a ROM 920). The processor 905 may be any type of processing unit, such as a processor core, a processor and/or a microcontroller. The processor 905 may execute, among other things, the example process of FIG. 5, 6 and/or 7A-D to implement the example control platform 110, the controllers 150-152, and/or the example processor 205 described herein. The processor 905 is in communication with the main memory (including a ROM 920 and/or the RAM 915) via a bus 925. The RAM 915 may be implemented by DRAM, SDRAM, and/or any other type of RAM device, and ROM may be implemented by flash memory and/or any other desired type of memory device. Access to the memory 915 and 920 may be controlled by a memory controller (not shown). The RAM 915 may be used to store and/or implement, for example, the example main memory 210 of FIG. 2.

The processor platform 900 also includes an interface circuit 930. The interface circuit 930 may be implemented by any type of interface standard, such as a USB interface, a Bluetooth interface, an external memory interface, serial port, general purpose input/output, etc. One or more input devices 935 and one or more output devices 940 are connected to the interface circuit 930. The input devices 935 and/or output devices 940 may be used to, for example, implement the example backplane interface 245 of FIG. 2.

## Claims

1. A method to upgrade software for the control of a process plant wherein a control component of a process control system (105) is upgraded while the process control system (105) maintains active control process operations, the method comprising:
running an existing component (815) of the software in a portion of a process control system memory as part of active control process operations;
instantiating a replacement component (825) of the software in a portion of a process control system memory while the process control system (105) is actively controlling the process using the existing component (815);
copying state data from an existing control component to the replacement control component using communication circuitry of the process control system (105) while the process control system (105) is maintaining active operations using the existing component (815); and
changing the replacement component (825) to an active mode when a first state of the replacement component (825) matches a second state of the existing component (815);
**characterised by**;
routing a first portion of inputs from the existing component (815) to the replacement component (825) while routing a second portion of inputs, distinct from the first portion of inputs, through the existing component (815) while maintaining control process operations using both the existing component (815) and the replacement component (825).

2. A method as defined in claim 1, wherein a first control application comprises the replacement component (825) while a second control application continues to comprise the existing component (815).

3. A method as defined in any one of claims 1 or 2, wherein the replacement component (825) is instantiated as a redundant module for the existing component (815).

4. A method as defined in any one of the preceding claims, wherein the replacement component (825) is instantiated as an isolated process by a real-time operating system.

5. A method as defined in any one of the preceding claims, wherein an interprocess communication is used to copy the state data.

6. A method as defined in claim 5, wherein the inter-process communication comprises a portable operating system interface call.

7. A method as defined in any one of the preceding claims, further comprising:
verifying that the first state matches the second state; and
copying additional state data from the existing component (815) to the replacement component (825) when the first state and the second state do not match.

8. A method as defined in any one of the preceding claims, further comprising performing a test of the replacement component (825) before changing the replacement component (825) to the active mode.

9. A method as defined in any one of the preceding claims, wherein the replacement component (825) comprises a sub-system of a control application, and wherein other subsystems of the control application are not upgraded.

10. A method as defined in any one of the preceding claims, wherein the software upgrade is capable of occurring without use of other control devices (151, 152).

11. A method as defined in any one of the preceding claims, wherein the replacement component (825) comprises a hot fix.

12. An article of manufacture storing machine readable instructions which, when executed, cause a machine to upgrade software for the control of a process plant wherein a control component of a process control system (105) is upgraded while the process control system (105) maintains active control process operations by:
running an existing component (815) of the software in a portion of a process control system memory as part of active control process operations;
instantiating a replacement component (825) of the software in a portion of a process control system memory while the control system is actively controlling the process using the existing component (815);
copying state data from an existing control component to the replacement control component using communication circuitry of the process control system (105) while the process control system (105) is maintaining active operations using the existing component (815); and
changing the replacement component (825) to an active mode when a first state of the replacement component (825) matches a second state of the existing component (815);
**characterised by**;
routing a first portion of inputs from the existing component (815) to the replacement component (825) while routing a second portion of inputs, distinct from the first portion of inputs, through the existing component (815) while maintaining control process operations using both the existing component (815) and the replacement component (825).

## Patentansprüche

1. Verfahren zum Aktualisieren einer Software zur Steuerung einer Prozessanlage, wobei eine Steuerkomponente eines Prozesssteuerungssystems (105) aktualisiert wird, während das Prozesssteuerungssystem (105) aktive Steuerprozessfunktionsabläufe aufrechterhält, wobei das Verfahren umfasst:
Bewirken eines Ablaufs einer bestehenden Komponente (815) der Software in einem Teil eines Prozesssteuerungssystemspeichers als Teil von aktiven Steuerprozessfunktionsabläufen;
Instanziieren einer Austauschkomponente (825) der Software in einem Teil eines Prozesssteuerungssystemspeichers, während das Prozesssteuerungssystem (105) den Prozess anhand der bestehenden Komponente (815) aktiv steuert;
Kopieren von Zustandsdaten aus einer bestehenden Steuerkomponente in die Austauschsteuerkomponente unter Verwendung einer Kommunikationsschaltung des Prozesssteuerungssystems (105), während das Prozesssteuerungssystem (105) aktive Funktionsabläufe anhand der bestehenden Komponente (815) aufrechterhält; und
Bewirken eines Wechsels der Austauschkomponente (825) zu einem aktiven Modus, wenn ein erster Zustand der Austauschkomponente (825) mit einem zweiten Zustand der bestehenden Komponente (815) übereinstimmt;
**gekennzeichnet durch**:
Leiten eines ersten Teils von Eingaben von der bestehenden Komponente (815) zur Austauschkomponente (825), während ein zweiter Teil von Eingaben, die sich vom ersten Teil von Eingaben unterscheiden, **durch** die bestehende Komponente (815) geleitet wird, während Steuerprozessfunktionsabläufe anhand sowohl der bestehenden Komponente (815) als auch der Austauschkomponente (825) aufrechterhalten werden.

2. Verfahren nach Anspruch 1, wobei eine erste Steueranwendung die Austauschkomponente (825) umfasst, während eine zweite Steueranwendung weiterhin die bestehende Komponente (815) umfasst.

3. Verfahren nach einem der Ansprüche 1 oder 2, wobei die Austauschkomponente (825) als redundantes Modul für die bestehende Komponente (815) instanziiert wird.

4. Verfahren nach einem der vorhergehenden Ansprüche, wobei die Austauschkomponente (825) durch ein Echtzeitbetriebssystem als isolierter Prozess instanziiert wird.

5. Verfahren nach einem der vorhergehenden Ansprüche, wobei eine Interprozesskommunikation zum Kopieren der Zustandsdaten verwendet wird.

6. Verfahren nach Anspruch 5, wobei die Interprozesskommunikation einen tragbaren Betriebssystemschnittstellenruf umfasst.

7. Verfahren nach einem der vorhergehenden Ansprüche, darüber hinaus umfassend:
Verifizieren, dass der erste Zustand mit dem zweiten Zustand übereinstimmt; und
Kopieren von zusätzlichen Zustandsdaten von der bestehenden Komponente (815) in die Austauschkomponente (825), wenn der erste Zustand und der zweite Zustand nicht übereinstimmen.

8. Verfahren nach einem der vorhergehenden Ansprüche, darüber hinaus umfassend, einen Test der Austauschkomponente (825) vor dem Wechsel der Austauschkomponente (825) zum aktiven Modus durchzuführen.

9. Verfahren nach einem der vorhergehenden Ansprüche, wobei die Austauschkomponente (825) ein Subsystem einer Steueranwendung umfasst, und wobei andere Subsysteme der Steueranwendung nicht aktualisiert werden.

10. Verfahren nach einem der vorhergehenden Ansprüche, wobei die Software-Aktualisierung ohne Verwendung anderer Steuervorrichtungen (151, 152) stattfinden kann.

11. Verfahren nach einem der vorhergehenden Ansprüche, wobei die Austauschkomponente (825) eine Im-Betrieb-Fehlerbehebung (Hot Fix) umfasst.

12. Fertigungsartikel, der maschinenlesbare Anweisungen speichert, die, wenn sie ausgeführt werden, eine Maschine dazu veranlassen, eine Software zur Steuerung einer Prozessanlage zu aktualisieren, wobei eine Steuerkomponente eines Prozesssteuerungssystems (105) aktualisiert wird, während das Prozesssteuerungssystem (105) aktive Steuerprozessfunktionsabläufe aufrechterhält durch:
Bewirken eines Ablaufs einer bestehenden Komponente (815) der Software in einem Teil eines Prozesssteuerungssystemspeichers als Teil von aktiven Steuerprozessfunktionsabläufen;
Instanziieren einer Austauschkomponente (825) der Software in einem Teil eines Prozesssteuerungssystemspeichers, während das Steuerungssystem den Prozess anhand der bestehenden Komponente (815) aktiv steuert;
Kopieren von Zustandsdaten aus einer bestehenden Steuerkomponente in die Austauschsteuerkomponente unter Verwendung einer Kommunikationsschaltung des Prozesssteuerungssystems (105), während das Prozesssteuerungssystem (105) aktive Funktionsabläufe anhand der bestehenden Komponente (815) aufrechterhält; und
Bewirken eines Wechsels der Austauschkomponente (825) zu einem aktiven Modus, wenn ein erster Zustand der Austauschkomponente (825) mit einem zweiten Zustand der bestehenden Komponente (815) übereinstimmt;
**gekennzeichnet durch**:
Leiten eines ersten Teils von Eingaben von der bestehenden Komponente (815) zur Austauschkomponente (825), während ein zweiter Teil von Eingaben, die sich vom ersten Teil von Eingaben unterscheiden, **durch** die bestehende Komponente (815) geleitet wird, während Steuerprozessfunktionsabläufe anhand sowohl der bestehenden Komponente (815) als auch der Austauschkomponente (825) aufrechterhalten werden.

## Revendications

1. Procédé pour mettre à jour un logiciel pour la commande d'une installation de processus, dans lequel un composant de commande d'un système de commande de processus (105) est mis à jour tandis que le système de commande de processus (105) maintient des opérations de processus de commande actives, le procédé comprenant les étapes consistant à :
faire tourner un composant existant (815) du logiciel dans une partie d'une mémoire du système de commande de processus en tant que partie d'opérations de processus de commande actives ;
instancier un composant de remplacement (825) du logiciel dans une partie d'une mémoire du système de commande de processus tandis que le système de commande de processus (105) commande activement le processus en utilisant le composant existant (815) ;
copier des données d'état depuis un composant de commande existant vers le composant de commande de remplacement en utilisant des circuits de communication du système de commande de processus (105) tandis que le système de commande de processus (105) maintient des opérations actives en utilisant le composant existant (815) ; et
changer le composant de remplacement (825) vers un mode actif lorsqu'un premier état du composant de remplacement (825) s'accorde à un second état du composant existant (815) ;
**caractérisé par** les étapes consistant à :
router une première partie d'entrées depuis le composant existant (815) vers le composant de remplacement (825), tout en routant une seconde partie d'entrées, distinctes de la première partie d'entrées, à travers le composant existant (815) tout en maintenant des opérations de processus de commande en utilisant à la fois le composant existant (815) et le composant de remplacement (825).

2. Procédé selon la revendication 1, dans lequel une première application de commande comprend le composant de remplacement (825) tandis qu'une seconde application de commande continue à comprendre le composant existant (815).

3. Procédé selon l'une quelconque des revendications 1 ou 2, dans lequel le composant de remplacement (825) est instancié en tant que module redondant pour le composant existant (815).

4. Procédé selon l'une quelconque des revendications précédentes, dans lequel le composant de remplacement (825) est instancié sous la forme d'un processus isolé par un système de fonctionnement en temps réel.

5. Procédé selon l'une quelconque des revendications précédentes, dans lequel une communication inter-processus est utilisée pour copier les données d'état.

6. Procédé selon la revendication 5, dans lequel la communication inter-processus comprend un appel d'interface de système d'exploitation portable.

7. Procédé selon l'une quelconque des revendications précédentes, comprenant en outre les étapes consistant à :
vérifier que le premier état s'accorde au second état ; et
copier des données d'état additionnelles depuis le composant existant (815) vers le composant de remplacement (825) lorsque le premier état et le second état ne sont pas accordés.

8. Procédé selon l'une quelconque des revendications précédentes, comprenant en outre l'étape consistant à effectuer un test du composant de remplacement (825) avant changement du composant de remplacement (825) vers le mode actif.

9. Procédé selon l'une quelconque des revendications précédentes, dans lequel le composant de remplacement (825) comprend un sous-système d'une application de commande, et dans lequel d'autres sous-systèmes de l'application de commande ne sont pas mis à jour.

10. Procédé selon l'une quelconque des revendications précédentes, dans lequel la mise à jour du logiciel est capable de survenir sans utilisation d'autres dispositifs de commande (151, 152).

11. Procédé selon l'une quelconque des revendications précédentes, dans lequel le composant de remplacement (825) comprend un correctif d'urgence.

12. Article de fabrication mémorisant des instructions lisibles à la machine qui, lorsqu'elles sont exécutées, amènent une machine à mettre à jour un logiciel pour la commande d'une installation de processus, dans lequel un composant de commande d'un système de commande de processus (105) est mis à jour tandis que le système de commande de processus (105) maintient des opérations de processus de commande active, en :
faisant tourner un composant existant (815) du logiciel dans une partie d'une mémoire du système de commande de processus en tant que partie d'opérations de processus de commande actives ;
instancier en un composant de remplacement (825) du logiciel dans une partie d'une mémoire du système de commande de processus, tandis que le système de commande du processus (105) commande activement le processus en utilisant le composant existant (815) ;
copier en des données d'état depuis un composant de commande existant vers le composant de commande de remplacement en utilisant des circuits de communication du système de commande de processus (105) tandis que le système de commande de processus (105) maintient des opérations actives en utilisant le composant existant (815) ; et
changeant le composant de remplacement (825) vers un mode actif lorsqu'un premier état du composant de remplacement (825) s'accorde avec un second état du composant existant (815) ;
**caractérisé par** :
le routage d'une première partie d'entrées vers le composant de remplacement (825) tout en routant une seconde partie d'entrées, distincte de la première partie d'entrées, à travers le composant existant (815) tout en maintenant des opérations de processus de commande en utilisant le composant existant (815) et le composant de remplacement (825).
